# EUROPÄISCHE PATENTSCHRIFT

(11) **EP 1 322 251 B1**
(45) Veröffentlichungstag und Bekanntmachung des Hinweises auf die Patenterteilung: **10.01.2007**
(21) Anmeldenummer: 01960469.3
(22) Anmeldetag: 05.07.2001
(51) Int. Cl.: A61C 13/12, A61C 13/00, A61C 9/00

(54) **VORRICHTUNG ZUM UMSETZEN VON MINDESTENS EINEM TEIL EINES ZAHNTECHNISCHEN WERKSTÜCKES SOWIE VERFAHREN**
DEVICE FOR TRANSPLANTING AT LEAST ONE PART OF A DENTAL COMPONENT IN ADDITION TO A METHOD THEREFOR
DISPOSITIF POUR DEPLACER AU MOINS UNE PARTIE D'UN ELEMENT DENTAIRE ET PROCEDE CORRESPONDANT

(30) Priorität: 18.09.2000 DE 20016236 U
(43) Veröffentlichungstag der Anmeldung: 02.07.2003
(73) Patentinhaber: Küchler, Claus, 86869 Gutenberg (DE)
(72) Erfinder: Küchler, Claus, 86869 Gutenberg (DE)
(74) Vertreter: Fürst, Siegfried
(86) Internationale Anmeldenummer: PCT/EP2001/007724
(87) Internationale Veröffentlichungsnummer: WO 2002/022042

(56) Entgegenhaltungen:
- US-A- 4 017 972

## Beschreibung

### Anwendungsgebiet

Die Erfindung betrifft eine Vorrichtung zum Umsetzen von mindestens einem Teil eines zahntechnischen Werkstückes, welches in der Dentaltechnik bei der Herstellung von Zahnprothesen als Arbeitshilfsmittel einsetzbar ist sowie ein Verfahren zum Umsetzen eines oder mehrerer Werkstücke.

### Stand der Technik

Für das Umsetzen von mindestens einem Teil eines zahntechnischen Werkstückes auf ein weiteres zahntechnisches Werkstück, z.B. auf ein Arbeitswerkstück, in der Fachsprache auch mit Arbeitssockel bezeichnet, ist bekannt, dass besagtes zahntechnisches Werkstück auf einem Arbeitsgerät positioniert und sodann das betreffende Teil des zahntechnischen Werkstückes an einem vertikalen Stab fixiert wird, welcher in der Arbeitsspindel des Arbeitsgerätes, z. B. eine vertikal verschiebbare Bohrmaschine, vorübergehend befestigt ist. Nach erfolgter Fixierung dieses Hilfsstabes an dem besagten Werkstück, worunter im folgenden ein Zahnkranzsegment oder ein Stumpf oder eine Metallkappe- Primärkrone - oder ein Modell bzw. Modellwerkstück oder ein Pin, der in eine Impression eines Kieferabdrucks eingesetzt wird, oder sonstige zahntechnische Werkstücke und Hilfsmittel zu verstehen sind, wird die im wesentlichen vertikal ausgerichtete Arbeitsspindel angehoben, so dass das einzelne Teil aus dem zahntechnischen Werkstück gehoben wird. Danach wird besagtes zahntechnisches Werkstück gegen besagtes Arbeitswerkstück- Frässockel - getauscht, die Arbeitsspindel des Arbeitsgerätes wieder soweit herabgesenkt, dass das entnommene Teil des zahntechnischen Werkstückes nunmehr auf dem Arbeitswerkstück positioniert und fixiert werden kann. Weitere umzusetzende Teile besagten zahntechnischen Werkstückes werden dann nacheinander in der gleichen Art und Weise umgesetzt. Diese Arbeitsweise ist sehr zeitaufwendig.

Weiterhin ist bekannt, dass anstelle einzelner Hilfsstäbe ein Hilfskörper, der mehrere, spinnenbeinartig in einer horizontalen Ebene angeordnete Hilfsstäbe aufweist für das Umsetzen Verwendung findet. Zum Abheben mehrerer zahntechnischer Werkstücke werden diese nacheinander an den freien Enden der Hilfsstäbe befestigt.

Mit dieser Verbesserung ist aber nur die für das Ein-/ und Ausspannen der einzelnen Hilfsstäbe pro Werkstück benötigte Zeit einsparbar. Neben dem genannten Vorteil hat diese Arbeitsweise jedoch wiederum Nachteile. Beim Positionieren eines der am Hilfskörper angeordneten Hilfsstäbe über dem umzusetzenden Teil dürfen die weiteren vorhandenen Hilfsstäbe nicht das zahntechnische Werkstück berühren. Bei der Positionierung des ersten Hilfsstabes geht alles noch problemlos, da das zahntechnische Werkstück oder die Arbeitsspindel des Arbeitsgerätes in Bezug zueinander ungestört verschiebbar sind. Sofern jedoch an nur einem der Hilfsstäbe bereits ein Teil -z. B ein Stumpf oder eine Primärkrone- fixiert ist, wird die Bewegungsfreiheit vom zahntechnischen Werkstück in Bezug auf den in der Arbeitsspindel gehalterten Hilfskörper stark eingeschränkt. Zudem muss der betreffende Dentaltechniker darauf achten, dass das / die bereits an Hilfsstäben fixierten und zwangsläufig vom zahntechnischen Werkstück abgehobenen und noch am Hilfskörper hängenden Teile keine Lageänderung bezüglich der eingenommen Fixierung erfahren oder gar selbst beschädigt werden. Hierdurch ist wiederum ein zusätzlicher Zeitaufwand notwenig, zumal für jede neue Verbindung zwischen einem Hilfsstab und einem weiteren Werkstück eine neue Kunststoffmasse angesetzt werden muß, die erst nach einer gewissen Abbindezeit eine Fixierung des Werkstücks am Hilfsstab erlaubt. Dieser Zeitbedarf ist gegen die weiter vorn genannte Einsparung zu rechnen.

Allerdings ist mit einer derartigen spinnenbeinartigen Vorrichtung die in vertikaler Richtung gesehen parallele Ausrichtung aller zahntechnischer Werkstücke zueinander ermöglicht, so daß z. B. beim nachfolgenden Fräsen der Außenkonturen der Metallkappen bzw. Primärkronen diese alle eine zueinander parallele zylindrische Außenkontur erhalten, auf die, wenn die Kappen im Mund auf den Zahnstümpfen befestigt sind, die eigentliche Krone aufgesetzt wird.

Als Hilfsmittel zum Positionieren von Pins, auch Spannstifte genannt, jeweils bezüglich einer Impression in einem Kieferabdruck bei der Herstellung eines zahntechnischen Modells von selbigem ist eine Vorrichtung gemäß der US 4,017,972 bekannt. Dieses Gerät besteht aus einem auf der Arbeitsfläche eines Tisches oder dergleichen Gegenstandes aufstellbaren Gestelles, welches eine aufragende Säule aufweist. Im unteren Bereich des Gerätes ist ein Tischgrundkörper am Gestell vorgesehen. Dieser Tischgrundkörper ist in der Vertikalen höhenverstellbar an der Säule geführt angeordnet. Auf den Tischgrundkörper ist eine auswechselbare Tischplatte aufgesetzt. Es sind Justierstifte vorgesehen, mit welchen die Tischplatte, nach Abnahme vom Tischgrundkörper, wieder in die gleiche Lage positioniert aufgesetzt werden kann. Oberhalb des Tisches und oberhalb des Raumes, innerhalb dessen die Tischplatte in der Vertikalen höhenverstellt werden kann, ist an der Säule eine Vorrichtung fest angebracht, die einen Grundkörper aufweist und wenigstens ein Justierstück, in welchem ein Justierstab verschiebbar gehalten werden kann. Das Justierstück ist stabförmig ausgebildet und besitzt an einem Ende einen ringförmigen Klemmhalter. In diesem Klemmhalter ist der Justierstab aufgenommen und gehalten. Gegen Überwindung einer Reibkraft ist der Justierstab in einer vertikalen Achse verschiebbar. Der Grundkörper besteht aus einem gebogenen Stab, mit im Wesentlichen rechteckigen Querschnitt, der bogenähnlich einer Reihe von Zähnen gestaltet ist. Die Enden dieses gebogenen Stabes sind durch eine Querspange miteinander verbunden. Die Querspange und damit der Grundkörper der Vorrichtung ist unverschiebbar an der Säule befestigt. Der gebogene Stab des Grundkörpers selbst bzw. Körperteile von ihm sind magnetisch. Die nach oben zeigende Körperfläche des gebogenen Stabes ist zwischen deren Kanten abgesenkt, sodass die Körperkanten nach oben hervorstehen.

Auf diesen erhöhten Körperkanten wird der bzw. die stabförmigen Justierstücke aufgelegt. Durch die magnetische Ausführung des gebogenen Teils des Grundkörpers liegen diese Justierstücke relativ fest auf. Der zum Arbeitstisch hin zeigende Abschnitt eines jeden Justierstabes besitzt eine stirnseitige Bohrung, in welcher ein Spannstift (Pin) positioniert wird. Ein auf den Arbeitstisch bzw. die abnehmbare Arbeitsplatte aufgelegter, mit seiner offenen Seite nach oben zeigender Kieferabdruck wird durch Höhenverstellung der Arbeitsplatte bis in die erforderliche Höhe unter den bogenförmigen Grundkörper gefahren. Für jedes, bzw. die vorgesehenen Impressionen im Kieferabdruck wird ein stabförmiges Justierstück so verschoben, dass der gehaltene Pin über der entsprechenden Impression liegt. Zum Senken des Pins muss der Bediener mit einer Hand/Finger das stabförmige Justierstück festhalten, mit der anderen Hand drückt er den Justierstab so weit nach unten, bis eine vorgegebene Sollkante des Spannstiftes in einer vorgegebenen Höhenlage zum Kieferabdruck steht. Dies ist dann mit jedem zu setzenden Pin zu vollziehen.

Nach dem Ausrichten aller erforderlichen Pins wird der Arbeitstisch abgesenkt, der Kieferabdruck entnommen, mit einer flüssigen, aushärtbaren Masse gefüllt, wieder auf den Arbeitstisch aufgesetzt und selbiger wird sodann nach oben unter die positionierten Pins bewegt, bis zumindest ein Teilabschnitt jedes Pins, die zuvor genannte Sollkante, in die flüssige Masse eingetaucht ist. Nunmehr darf an diesem Gerät nichts mehr bewegt werden, bis die Masse, die letztendlich das Arbeitsmodell bildet, ausgehärtet ist.

Durch die bogenförmige, hohle Ausführung des Grundkörpers sind die Justierstäbe selbst vor unbeabsichtigtem Bewegen geschützt. Die über die äußere Körperkante des bogenförmigen Grundkörpers hinausragenden Justierstücke bilden jedoch Gefahrenstellen. Sofern an diese unbeabsichtigt angestoßen wird, verschiebt sich der Pin aus seiner Solllage. Es ist also ein entsprechendes sorgfältiges Arbeiten durch den Bediener notwendig, was auch zeitaufwändig ist.

Sofern der Zahnbogen eines Kieferabdruckes gleichmäßig verläuft, liegen die im Wesentlichen vertikal gerichteten Justierstäbe in unmittelbare Nähe der Innenfläche des bogenförmigen Stabes des Grundkörpers; was jedoch nicht immer der Fall ist, sodass die Klemmstelle mitsamt dem Justierstab ungünstig weit von der Körperkante entfernt liegen kann und somit ein ungünstiger Kipp-Hebel entsteht.

Für das Umsetzen von einem oder mehreren Teilen eines zahntechnischen Werkstückes, zum Beispiel Segmenten des Modells eines Kieferabdruckes, könnte dieses Gerät zwar genutzt werden, jedoch birgt es die vorgenannten Nachteile in sich. Insbesondere, wenn die Zahnhöhe des Kieferabdruckes bzw. der Segmente des Modells eines Kieferabdruckes in ihrer Höhenlage sehr stark differieren, müssen die Justierstäbe sehr weit nach unten und oben verschoben werden. Dadurch wird der Masseschwerpunkt des aus dem Justierstück und dem Justierstab gebildeten Körpers verschoben, wodurch es unter Umständen zu einer Kippung des Justierstabes bezüglich der Vertikalen kommen kann. Die Innenlage der Justierstäbe in dem bogenförmig geführten Grundkörper ist einerseits von Vorteil, jedoch andererseits bei dem hier angesprochenen Umsetzen von Segmenten eines Modells nachteilig, weil es den Blick des Bedieners auf die obere Spitze/Fläche des Modellsegmentes behindert. Um dies zu vermeiden, müssten die Justierstäbe sehr weit abgesenkt werden, was wiederum nachteilig für den Kipp-Punkt der Justierstücke ist.

### Aufgabe

Der Erfindung liegt die Aufgabe zugrunde, eine Vorrichtung zum Umsetzen von mindestens einem Teil eines zahntechnischen Werkstückes zu schaffen, welche gegenüber den bekannten Vorrichtungen eine Einsparung an Arbeitszeit bringt, zudem einfach und flexibel in der Handhabung ist und das Risiko einer eventuellen Beschädigung der umzusetzenden Teile weiter senken kann und die relative Ausrichtung der einzelnen Werkstücke zueinander erhalten bleibt.

### Lösung der Aufgabe

Erfindungsgemäß wird die gestellte Aufgabe durch eine Vorrichtung zum Umsetzen von mindestens einem Teil eines zahntechnischen Werkstückes mit den Merkmalen des Patentanspruches 1 insbesondere durch dessen kennzeichnenden Merkmale gelöst. Die nachgeordneten Patentansprüche 2 bis 6 offenbaren Weiterbildungen und Ausführungsvarianten der grundlegend neu gestalteten Vorrichtung zum Umsetzen. Zudem zeigen die Patentansprüche 7 und 8 für den eingangs genannten Arbeitsprozess neuartige Verfahrensschritte auf. Zur Durchführung dieses neuen Verfahrens ist unter anderem auch die zuvor genannte neue Vorrichtung zum Umsetzen von mindestens einem Teil eines zahntechnischen Werkstückes geeignet.

Ein wesentlicher Vorteil der vorliegenden Erfindung besteht darin, dass sowohl das neue Verfahren als auch die neue Vorrichtung gegenüber bekannten Verfahren und Vorrichtungen für den hier zur Rede stehenden Arbeitsprozess wesentlich handlicher sind und zudem erhebliche Zeiteinsparungen ermöglichen.

Wesentlich ist, daß beim Umsetzen von mindestens einem Teil eines zahntechnischen Werkstückes von selbigem auf ein anderes zahntechnisches Werkstück, zum Beispiel ein Arbeitswerkstück - in der Fachsprache auch Frässockel genannt -, die erfindungsgemäße Vorrichtung nur einmal über dem zahntechnischen Werkstück positioniert wird und anschließend die umzusetzenden Teile dieses zahntechnischen Werkstückes mit Teilen der Vorrichtung verbunden werden und sodann mittels eines einzigen Arbeitsschrittes alle umzusetzende Teile des zahntechnischen Werkstückes auf das andere Werkstück (Frässockel) umgesetzt und dort auf dessen Aufstellfläche positioniert und sodann fixiert werden. Dabei werden die umzusetzenden Teil des zahntechnischen Werkstückes, zum Beispiel ein Zahnkranzsegment oder ein Stumpf oder eine sogenannte Primärkrone, an besagter Vorrichtung mit einem Verbindungsmittel, zum Beispiel ein Kleber, fixiert und sodann das Umsetzen durchgeführt. Dabei ist die größte Zeitersparnis erreichbar, da der Kleber, z. B. ein Zweikomponentenkunststoffkleber, nur einmal angesetzt, alle Verbindungen zwischen der Vorrichtung und den jeweiligen Werkstücken hergestellt und nur einmal die Abbindezeit abgewartet wird.

Bevorzugt wird als Verbindungsmittel ein lufthärtbarer Kunststoff verwendet.

Damit ist erreicht, daß die relative Ausrichtung der mehreren Werkstücke zueinander, insbesondere der vertikalen Achsen, erhalten bleibt.

Es ist vorgesehen, dass das oder die Teile der Vorrichtung, an welchen das oder die umzusetzenden Teile zu fixieren sind, nur bei Bedarf an einem weiteren Teil der Vorrichtung anleg- und festlegbar sind. Das bedeutet, daß nur soviele Teile an der Vorrichtung befestigt werden müssen, wie es umzusetzende Werkstücke gibt.

Es ist zudem vorgesehen, dass vorgenannte besagte Teile zumindest in einer Koordinatenachse verschieb- sowie festlegbar sind. Dadurch wird erreicht, dass nicht die gesamte Vorrichtung zur Verbindung des gerade abzunehmenden Teiles in Richtung des zahntechnischen Werkstückes bewegt werden muss, sondern dass die Vorrichtung an sich in einer bezüglich des betreffenden zahntechnischen Werkstückes eingenommenen Position verbleiben kann und jeweils nur das gerade notwendige Verbindurigsteil der Vorrichtung an selbige anzulegen und bezüglich des umzusetzenden Teiles in Vorbereitung des Fixierens zu positionieren ist.

Besonders vorteilhaft ist hierbei, dass die gesamte Vorrichtung mit den bereits fixierten, umzusetzenden Teilen während der gesamten Arbeitsperiode des Fixierens in einer Arbeitsposition "fixieren" stehen bleiben kann. Ein weiterer Vorteil besteht darin, dass nur die unbedingt benötigte Anzahl von verbindenden Teilen an der Vorrichtung vorhanden sind und somit für den Bediener - Dentaltechniker - möglichst viel freier Arbeitsraum zwischen zahntechnischem Werkstück und Vorrichtung zum Umsetzen vorhanden ist.

Weiterhin besteht der Vorteil einer individuellen Lageverstellung der einzelnen Werkstücke zueinander bei der Umsetzung in einen sogenannten Frässockel; ohne die axiale Lage, in vertikaler Richtung, zum Grundstativ zu verändern.

Vorrichtungsmäßig zeichnet sich der Erfindungsgegenstand gegenüber dem Stand der Technik dadurch aus, dass eine Vorrichtung zum Umsetzen von mindestens einem Teil eines zahntechnischen Werkstückes von selbigem auf ein weiteres, ein Arbeitswerkstück oder ein sogenannter Arbeitssockel - Frässockel -, vorgesehen ist, wobei die Vorrichtung insbesondere an einem Arbeitsgerät oder Teilen von diesem, zum Beispiel einem Säulenarm einer Stativsäule, lösbar befestigt ist und wobei mindestens ein (Hilfs-) Stab für die Fixierung eines besagten umzusetzenden Teiles vorgesehen ist. Die Vorrichtung ist mehrteilig ausgeführt, jeder (Hilfs-) Stab ist vorzugsweise in vertikaler Richtung ausgerichtet und wahlweise an mindestens einem der Teile der Vorrichtung anlegbar und mindestens entlang einer Koordinatenachse verschiebbar sowie festlegbar ist.

Es ist vorgesehen, dass der besagte (Hilfs-) Stab ein Justierstab ist, der vertikal und/oder horizontal verschiebbar gehaltert ist.

Gemäß weiteren Ausführurigsvarianten ist zudem noch vorgesehen, dass dieser Justierstab mittels eines mechanischem Klemmstück, einer magnetischen Halterung, einer Rastung oder unter Nutzung von Klettverschlusstechnik festlegbar ist.

Im speziellen ist zudem vorrichtungsmäßig vorgesehen, dass die mehrteilige Vorrichtung aus einem Grundkörper sowie mehreren Justierstücken besteht, die gemäß weiter vorn beschriebener Methodik wahlweise bei Bedarf an den Grundkörper anlegbar sind, so dass die gesamte Vorrichtung jeweils nur die maximal notwendige Anzahl von Verbindungselementen aufweist.

Der Grundkörper besteht aus einer Zylinderscheibe, deren eine Stirnfläche als Kontaktfläche für die Anlage und Befestigung der Justierstücke ausgebildet ist. Die gegenüberliegende Stirnseite ist mit einem Zapfen versehen, der im Arbeitsgerät oder einem Antriebsaggregat des Arbeitsgerätes, z. B. einer Bohrspindel, gehaltert wird. Die Längsachse des Zapfens ist zugleich Längsachse des Grundkörpers, wobei diese Achse senkrecht zur Kontaktfläche angeordnet ist. Vorzugsweise ist die Kontaktfläche magnetisch ausgeführt, um die Justierstücke lösbar daran festzulegen-

Die Justierstücke sind derart ausgebildet, dass sie mindestens eine Anlagefläche besitzen, vorteilhaft zwei Anlageflächen, die sich im speziellen einander gegenüber liegen und vorzugsweise Außenflächen des Justierstückes sind.

Die Justierstücke weisen weiterhin mindestens eine Bohrung auf, die senkrecht zur Anlagefläche verlaufend als Durchgangsbohrung im Justierstück vorgesehen ist. Diese Bohrung ist zur Aufnahme eines in vertikaler Richtung verschiebbaren Justierstabes vorgesehen, welcher vorteilhafter Weise durch einen quer zur Bohrung angeordneten Gewindestift festlegbar ist.

### Ausführungsbeispiel

Die Erfindung wird anhand eines in Zeichnungen schematisch abgebildeten Ausführungsbeispieles im weiteren näher erläutert. Dabei zeigen:
- **Fig. 1:**: eine erfindungsgemäße Vorrichtung zum Umsetzen von mindestens einem Teil eines zahntechnischen Werkstückes, wobei hier die Vorrichtung bereits über einem Frässockel positioniert ist;
- **Fig. 2:**: die erfindungsgemäße Vorrichtung, die in sämtliche Einzelteile demontiert ist;
- **Fig. 3,4:**: eine Sicht von unten auf die Vorrichtung, mit jeweils verschiedener Anzahl von an der Kontaktfläche des Grundkörpers angeordneten Justierstücken;
- **Fig. 5:**: ein Arbeitsgerät, in dem die Vorrichtung sowie das abgebende als auch das aufnehmende zahntechnische Werkstück für den Umsetzvorgang gehalten bzw. positioniert Werden; und
- **Fig. 6:**: eine Darstellung entsprechend Fig 1, wobei hier in den Justierstücken Pins gehaltert sind.

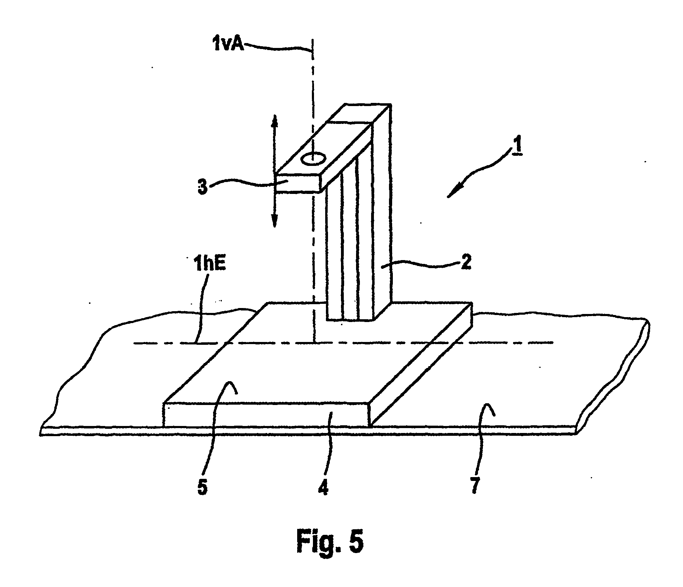

In der Figur 5 ist ein Arbeitsgerät 1 gezeigt, mit welchem beispielsweise die Vorrichtung 14 für das Umsetzen gehalten werden kann und auf welchem das abgebende und das aufnehmende zahntechnische Werkstück unter der aufgenommen Vorrichtung 14 positionierbar ist. Das Arbeitsgerät 1 ist mit seiner Stativgrundplatte 4 auf einer Tischplatte 7 aufgestellt. Vorzugsweise ragt von dem in der Figur 5 zu sehenden hinteren Stativgrundplattenbereich eine galgenförmige Stativsäule 2 aufwärts, die einen vorzugsweise höhenverstellbaren Säulenarm 3 aufweist. Dieser Säulenarm 3 wird von einer Vertikalachse 1vA durchsetzt. Im Bereich des gedachten Durchgangs dieser Achse 1vA durch den Körper des Säulenarmes 3 ist ein kreisförmig, nicht weiter bezeichnetes Loch angedeutet. Dieses Loch symbolisiert die Halterung für den Grundkörper 15 , der in dieser Figur nicht weiter detailliert wurde, und kann beispielsweise durch das Bohrfutter einer Bohrmaschine gebildet sein. Die Vertikalachse 1vA ist im wesentlichen rechtwinklig zur Auflagefläche 5 der Stativgrundplatte 4 ausgerichtet.

Die Auflagefläche 5 bildet zugleich die Horizontalebene 1hE des Arbeitsgerätes 1. Auf der Auflagefläche 5 werden sowohl das abgebende als auch das aufnehmende zahntechnische Werkstück während des Arbeitsprozesses "umsetzen" nacheinander unterhalb der im Säulenarm 3 gehalterten Vorrichtung 14 positioniert. Bei dieser Positionierung der zahntechnischen Werkstücke ist die Idealachse der umzusetzenden Werkstücke sowie die Vertikalachse des Arbeitsgerätes 1 zumindest relativ zueinander ausgerichtet. Mittels der Höhenverstellung des Säulenarmes 3, in der Figur 5 durch den im Eckenbereich des Säulenarmes 3 platzierten Pfeils angedeutet, wird die Vorrichtung 14 in Arbeitsposition bezüglich des jeweiligen untergestellten Werkstückes gebracht. Während der gesamten Zeit der Übertragung besagter Einzelteile verbleibt die Umsetzvorrichtung 14 in dieser Position.

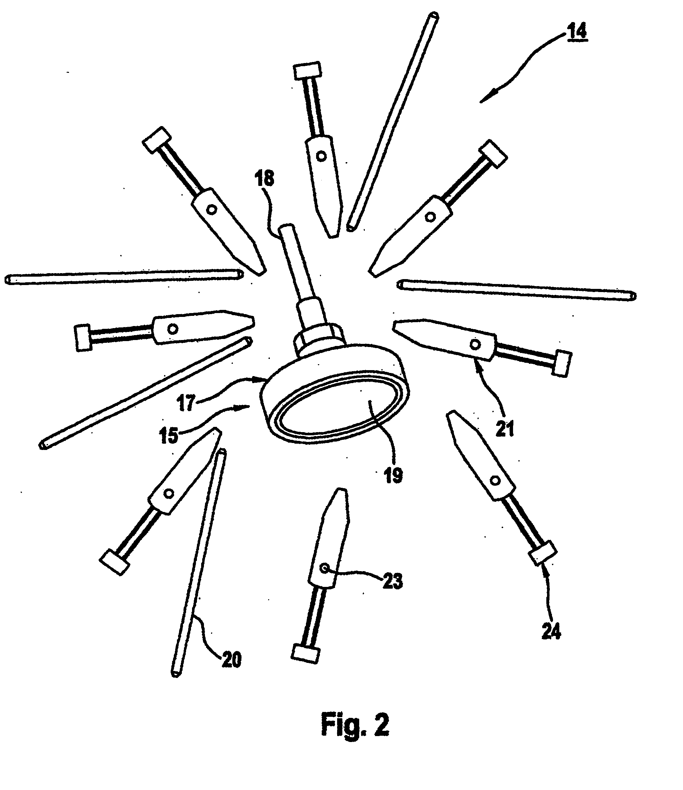

Die Einzelteile der mehrteiligen Umsetzvorrichtung 14 sind in der Figur 2 gezeigt. Die Umsetzvorrichtung 14 besteht aus einem Grundkörper 15. Dieser Grundkörper 15 umfasst eine Zylinderscheibe 17 und einen von letzterer ausgehenden Zapfen 18. Eine der Stirnseiten der Zylinderscheibe 17 ist als Kontaktfläche 19 ausgebildet. Die Längsachse des Zapfens 18 ist zugleich Längsachse 16 des Grundkörpers 15. Diese Längsachse 16 steht senkrecht zur Kontaktfläche 19. Die Kontaktfläche 19 ist ebenflächig ausgebildet, da an dieser die zur Umsetzvorrichtung 14 gehörenden Justierstücke 21 an- und festlegbar sind. Für die sichere und genaue Anlage der Justierstücke 21 an der Kontaktfläche 19 ist eine der Außenflächen der Justierstücke 21 als Anlagefläche 22 ausgebildet, gleichfalls eben- und glattflächig gestaltet. Die Kontaktfläche 19 als auch die Anlagefläche 22 bzw. der Korpus des Grundkörpers 15 und der Korpus des Justierstückes 21 sind als magnetisch wirkende Koppelstelle ausgebildet. Vorteilhafterweise ist der Magnet im Grundkörper 15 angeordnet bzw. dieser selbst.

Es ist jedoch auch möglich, die Kontaktfläche 19 als auch die Anlagefläche 22 so präzise zu fertigen, dass die Justierstücke 21 an den Grundkörper 15 ansprengbar sind über das Verbindungsprinzip der Adhäsionswirkung bei genügend präzisen Endmaßen.

Die Justierstücke 21 sind insbesondere mit mindestens einer Durchgangsbohrung 23 versehen. Die Längsachse der Bohrung 23 ist rechtwinklig zur Anlagefläche 22 des Justierstückes 21 angeordnet und parallel zur Vertikalachse 1 vA. In die Bohrung 23 ragt ein manuell betätigbarer Gewindestift 24, welcher in einer entsprechenden, hier nicht weiter dargestellten, Gewindebohrung aufgenommen ist. Die Bohrung 23 dient zur Aufnahme eines zur Umsetzvorrichtung 14 gehörenden Justierstabes 20, der mit dem Gewindestift 24 höhenverstellbar am Justierstück 21 festlegbar ist.

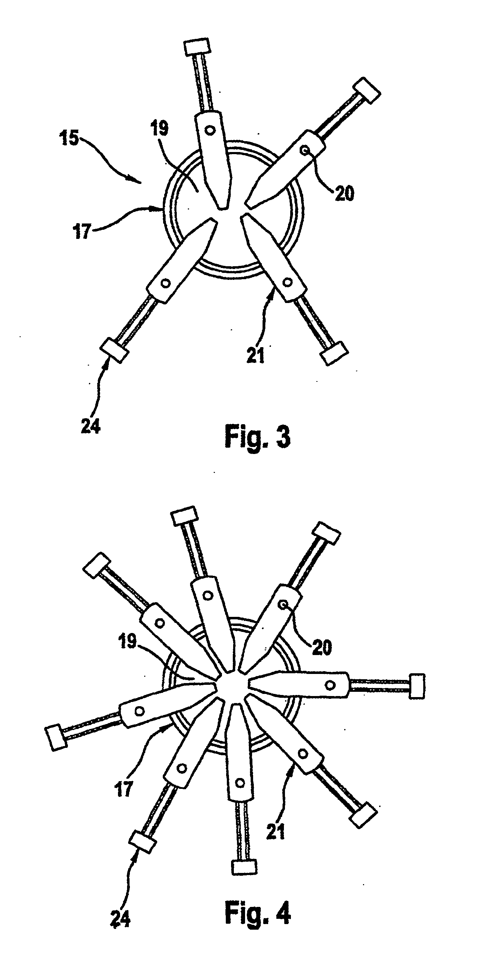

Die Figur 3 als auch die Figur 4 zeigen eine Ansicht von unten auf den Grundkörper 15, an welchem mehrere Justierstücke 21 angelegt sind. Die Darstellungen in diesen beiden Figuren verdeutlichen, dass neben der wahlweise verschiedenen Anzahl von Justierstücken 21 selbige in einfacher Weise in verschiedener Lage anlegbar sind. Bezüglich eines gedachten, in die Ebene der Kontaktfläche 19 gedanklich projizierten XY-Koordinatenkreuzes, können die in den Justierstücken 21 jeweils gehalterten Justierstäbe 20, die senkrecht zur Zeichenebene ausgerichtet sind, innerhalb eines durch die äußeren Maße der Justierstücke 21 vorgegebenen Bereiches jede beliebige Position einnehmen, sofern diese Position nicht durch ein benachbartes Element bereits belegt ist.

Um noch mehr Variationsmöglictikeit zu haben, ist an den Justierstücken 21 im speziellen vorgesehen, dass die zur Körpermittelachse des Grundkörpers 15 zeigenden Enden der Justierstücke 21 schräg auslaufen. Durch den an jedem Justierstück 21 vorgesehenen Klemmmechanismus für den Justierstab 20, ist der Justierstab 20 neben der zuvor genannten in gewissen Bereichen beliebigen XY-Positionierung zusätzlich auch in der Z-Richtung justierbar, während die Umsetzvorrichtung 14 an sich nicht aus ihrer vorgegebenen Grundposition für das Umsetzen herausbewegt werden muss.

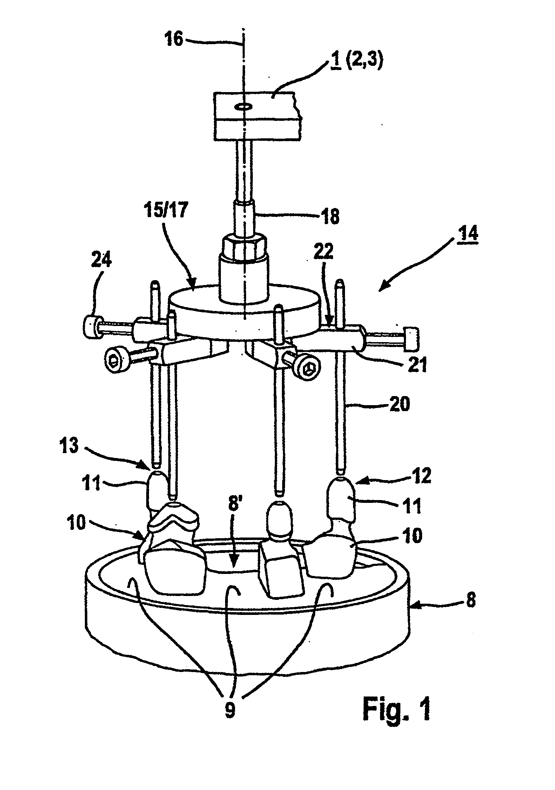

Wie aus der Darstellung gemäß Figur 1 offensichtlich erkennbar ist, sind unterschiedliche Höhen als auch unterschiedliche seitliche Lagen der umzusetzenden Teile eines zahntechnischen Werkstückes kein Hindernis um mit der neuartig gestalteten Umsetzvorrichtung 14 ein effektives, zeitsparendes Umsetzen vorzunehmen. Vielmehr sind derartige Gegebenheiten ein vorzügliches Einsatzgebiet für die neue Vorrichtung.

In der Figur 1 ist die neue Vorrichtung in seitlicher Perspektivansicht gezeigt. An dem Grundkörper 15 sind vier Justierstücke 21 angelegt, deren Justierstäbe 20 jeweils einen über eine Klebeverbindung an diesen fixierten Metallkronen tragenden Stumpf halten. Die von den abgebenden zahntechnischen Werkstück abgenommen Zahnstümpfe 10 werden in dieser Darstellung auf eine Aufstellfläche 8' eines Frässockels 8 aufgesetzt und mit einer Fixiermasse 9 auf diesem fixiert. Die Fixiermasse 9 ist z. B. ein Gips, Zement oder ein sonstiges in der Zahntechnik gebräuchliches Bindemittel.

In der in Figur 1 gezeigten Darstellung sind im Kopfbereich 13 der auf den Zahnstümpfen 10 vorhandenen Primärkronen 11 Zwischenräume vorhanden, die von einem nicht dargestellten Verbindungsmittel (Kleber) ausgefüllt werden, um den Kopfbereich 13 mit den nach unten weisenden Enden der Justierstäbe 20 zu verbinden.

Damit die Flanken 12 der Primärkronen 11 mit einem Werkzeug, zum Beispiel einem Fräser oder einem Schleifkörper, bearbeitet werden können, um einerseits die Flanken 12 an jeder Krone 11 als auch alle Flanken 12 aller Kronen 11 zueinander bzw. bezüglich der weiter vorn genannten Idealachse eines zahntechnischen Werkstückes parallel auszubilden, ist die Umsetzvorrichtung 14 vom Frässockel zu trennen. Dies kann auf zwei Arten erfolgen, die je nach Erfordernis angewandt werden. Zum einem wird das Verbindungsmittel zwischen jedem Stab und der betreffenden Krone entfernt oder es wird einfach nur die Verbindung der Justierstäbe 20 mit dem jeweiligen Justierstück 21 gelöst. Dabei bleibt die vertikale Ausrichtung des Justierstabes 20 zur Flanke 12 und damit die Ausrichtung der Flanke 12 einer daran befestigten Primärkrone 11 erhalten. Es zeigt sich hier wiederum, dass die neugestaltete Umsetzvorrichtung 14 ein hohes Maß an Variabilität gewährleistet.

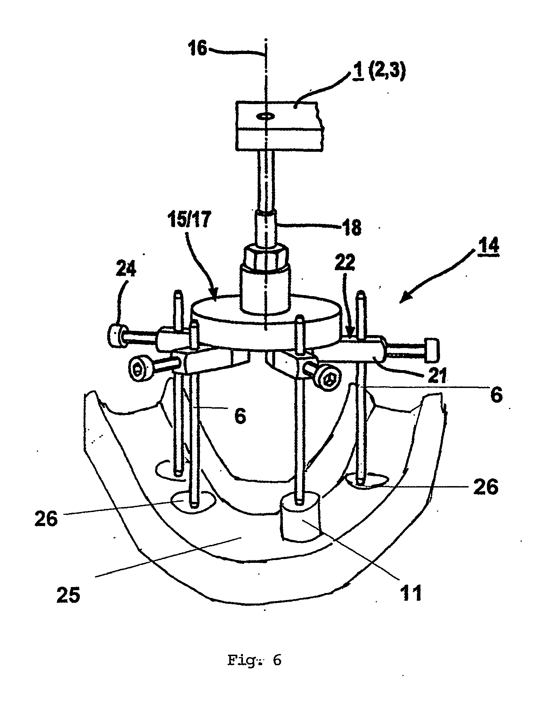

Wie in Figur 6 dargestellt kann in die Bohrungen 23 der Justierstücke 21 auch jeweils ein Pin 6 eingesetzt sein. Dieser wird durch Absenken des Säulenarmes 3 in eine Impression 26 eines zahnärztlichen Gebißabdrucks 25 eingeführt. In der Impression 26 wird der Pin 6 bzw. mehrere Pins 6 in jeweils einer oder mehreren Impressionen 26 mit einem Bindemittel fixiert. In einer derartigen Impression 26 kann auch bereits, mit der Öffnung nach oben weisend , eine Primärkrone 11 eingesetzt sein, so daß der Pin 6 in die Primärkrone 11 eingeführt wird. Mit dem Pin 6, der so mit einer Primärkrone 11 verbunden ist, kann diese leichter gehandhabt oder an einem weiteren Arbeitssockel befestigt werden.

### Bezugsziffernverzeichnis

| | | | |
|---|---|---|---|
| 1 | Arbeitsgerät | | |
| 1vA | Vertikalachse | 1hE | Horizontale Ebene |
| 2 | Stativsäule (galgenförmig) | 3 | Säulenarm |
| 4 | Stativgrundplatte | 5 | Auflagefläche (Modell-auflage) |
| 6 | Pin | | |
| 7 | Tischplatte | | |
| 8 | Frässockel | 8' | Aufstellfläche |
| 9 | Fixiermasse | | |
| 10 | Zahnstümpfe | 11 | Primärkronen |
| 12 | Flanken | 13 | Kopfbereich |
| 14 | Umsetzvorrichtung (Vorrichtung zum Umsetzen von Teilen eines zahntechnischen Werkstückes) | | |
| 15 | Grundkörper | | |
| 16 | Längsachse | | |
| 17 | Zylinderscheibe | 18 | Zapfen |
| 19 | Kontaktfläche | 20 | Justierstab |
| 21 | Justierstück | 22 | Anlagefläche |
| 23 | Bohrung | 24 | Gewindestift |
| 25 | Gebißabdruck | 26 | Impression |

## Patentansprüche

1. Vorrichtung zum Umsetzen von mindestens einem Teil eines zahntechnischen Werkstückes, wie u. a. Modell, Pin, Hilfsteil, von selbigem auf ein weiteres Werkstück, wie ein Arbeitswerkstück oder einen Arbeitssockel oder einen Frässockel , wobei
- die Vorrichtung (14) an einem Arbeitsgerät (1) oder Teilen von diesem, z. B. einem Säulenarm einer Stativsäule, befestigt
und
mindestens ein (Hilfs-) Stab, in Form eines Justierstabes (20), für die Fixierung eines besagten umzusetzenden Teils vorgesehen ist,
- die Vorrichtung (14) mehrteilig ausgeführt ist, und jeder Justierstab (20) wahlweise an mindestens einem der Teile der Vorrichtung (14) anlegbar und bezüglich Koordinatenachsen vertikal und/oder horizontal verschieb- sowie festlegbar ist,
- die Vorrichtung (14) einen Grundkörper (15) und ein Justierstück (21) mit Justierstab (20) umfasst, wobei der Grundkörper (15) derart ausgebildet ist, dass selbiger (15) am Arbeitsgerät (1) gehaltert werden kann,
**dadurch gekennzeichnet, dass**
der Grundkörper (15) eine Zylinderscheibe (17) sowie einen von selbiger (17) abragenden Zapfen (18) zur Haltung im Arbeitsgerät (1) umfasst, wobei eine der Stirnseiten der Zylinderscheibe (17) als Kontaktfläche (19) für das Justierstück (21) ausgebildet ist und besagter Zapfen (18) von der gegenüberliegenden Stirnseite abragt und dessen Längsachse zugleich die Längsachse (16) des Grundkörpers (15) ist, und wobei die Längsachse (16) im wesentlichen senkrecht liegend zu der Kontaktfläche (19) angeordnet ist,
und
die Vorrichtung (14) lösbar an dem Arbeitsgerät (1) oder Teilen von selbigem befestigt ist.

2. Vorrichtung nach Anspruch 1,
**dadurch gekennzeichnet, dass**
der Justierstab (20) mittels eines mechanischen Klemmstückes festlegbar ist.

3. Vorrichtung nach Anspruch 1,
**dadurch gekennzeichnet, dass**
der Justierstab (20) mittels einer magnetischen Halterung festlegbar ist.

4. Vorrichtung nach Anspruch 1 ,
**dadurch gekennzeichnet, dass**
eine der Außenflächen jedes Justierstückes (21) als ebene Anlagefläche (22) ausgebildet ist,
dass jedes Justierstück (21) eine durchgehende Bohrung (23), welche die Anlagefläche (22) durchsetzt, aufweist, wobei die Längsachse der Bohrung (23) senkrecht zur Anlagefläche (22) angeordnet ist und,
dass diese Bohrung (23) zur Aufnahme und Befestigung eines Justierstabes (20) ausgebildet ist und wobei im Justierstück (21) als mechanisches Klemmstück, ein Gewindestift (24), vorgesehen ist, dessen Führung (Gewindebohrung), bis in die Bohrung (23) hineinragt.

5. Vorrichtung nach Anspruch 1 oder 3,
**dadurch gekennzeichnet, dass**
der Grundkörper (15) einen Magnet enthält oder selber als solcher ausgebildet ist.

6. Vorrichtung nach Anspruch 4,
**dadurch gekennzeichnet, dass**
sowohl die Kontaktfläche (19) als auch die Anlagefläche (22) eine hohe Oberflächengüte besitzen, insbesondere geschliffen oder geleppt sind.

7. Verfahren zum Umsetzen von mindestens einem Teil eines zahntechnischen Werkstückes von selbigem auf ein anderes zahntechnisches Werkstück, z. B. ein Arbeitswerkstück oder einen Frässockel, bei dem das oder die umzusetzenden Teile des zahntechnischen Werkstückes, z.B. ein Zahnkranzsegment oder ein Stumpf oder eine sogenannte Primärkrone, an einer Vorrichtung nach einem der Ansprüche 1 bis 6 mit einem Verbindungsmittel, z.B. einem Kleber, fixiert werden und danach das Umsetzen erfolgt,
**dadurch gekennzeichnet,**
**dass** besagte Vorrichtung (14) nur einmal über dem zahntechnischen Werkstück positioniert wird, anschließend nacheinander alle umzusetzenden Teile dieses zahntechnischen Werkstückes mit der Vorrichtung (14) verbunden werden und sodann mittels eines einzigen Arbeitsschrittes alle umzusetzenden Teile des zahntechnischen Werkstückes auf das andere Werkstück umgesetzt und dort auf dessen Aufstellfläche (8') positioniert und gegebenenfalls fixiert werden.

8. Verfahren nach Anspruch 7,
**dadurch gekennzeichnet,**
**dass** die Verbindung zwischen der Vorrichtung (14) und den umzusetzenden Teilen des zahntechnischen Werkstückes mittels eines lufthärtbaren Kunststoffes erfolgt.

## Claims

1. Device for transferring at least a part of a dental workpiece, such as inter alia model, pin or auxiliary part, from the same to a further workpiece, such as a processing workpiece or a processing plinth or a milling plinth, wherein
- the device (14) is fastened to a processing apparatus (1) or parts thereof, for example to a column arm of a stand column, and at least one (auxiliary) rod, in the form of an adjusting rod (20), for fixing a said part to be transferred is provided, '
- the device (14) is of multi-part construction and each adjusting rod (20) can be selectably placed at at least one of the parts of the device (14) and is vertically and/or horizontally adjustable with respect to co-ordinate axes as well as fixable,
- the device (14) comprises a base body (15) and an adjusting member (21) with adjusting rod (20), wherein the base body (15) is constructed in the manner that the body (15) can be mounted at the processing apparatus (1), **characterised in that** the base body (15) comprises a cylinder disc (17) as well as a pin (18), which projects from the disc (17), for mounting in the processing apparatus (1), wherein one of the end faces of the cylinder disc (17) is constructed as a contact surface (19) for the adjusting member (21) and the said pin (18) projects from the opposite end face and the longitudinal axis thereof is at the same time coincident with the longitudinal axis (16) of the base body (15), and wherein the longitudinal axis (16) is arranged to be substantially perpendicular to the contact surface (19) and the device (14) is detachably fastened to the processing apparatus (1) or parts thereof.

2. Device according to claim 1, **characterised in that** the adjusting rod (20) is fixable by means of a mechanical clamping member.

3. Device according to claim 1, **characterised in that** the adjusting rod (20) is fixable by means of a magnetic retainer.

4. Device according to claim 1, **characterised in that** one of the outer surfaces of each adjusting member (21) is formed as a planar support surface (22), that each adjusting member (21) has a continuous bore (23) penetrating the support surface (22), wherein the longitudinal axis of the bore (23) is arranged perpendicularly to the support surface (22), and that this bore (23) is formed for reception and fastening of an adjusting rod (20), and wherein a threaded pin (24) is provided as mechanical clamping member in the adjusting member (21), the guide (threaded bore) of the pin extending as far as into the bore (23).

5. Device according to claim 1 or 3, **characterised in that** the base body (15) includes a magnet or is itself constructed as such.

6. Device according to claim 4, **characterised in that** not only the contact surface (19), but also the support surface (22) has a high surface quality, in particular ground or lapped.

7. Method of transferring at least a part of a dental workpiece from the same to another dental workpiece, for example a processing workpiece or a milling plinth, in which the parts, which are to be transferred, of the dental workpiece, for example a tooth crown segment or a stump or a so-called primary crown, are fixed to a device according to one of claims 1 to 6 by a connecting means, for example an adhesive, and thereafter the transfer takes place, **characterised in that** the said device (4) is positioned only initially over the dental workpiece, subsequently all parts, which are to be transferred, of this dental workpiece are connected in succession with the device (14) and then all parts, which are to be transferred, of the dental workpiece are transferred to the other workpiece by means of a single working step and are positioned there on the support surface (8') thereof and optionally fixed.

8. Method according to claim 7, **characterised in that** the connection between the device (14) and the parts, which are to be transferred, of the dental workpiece is carried out by means of a synthetic material hardenable by air.

## Revendications

1. Dispositif pour déplacer au moins une partie d'un élément dentaire comme entre autres un modèle, une broche, un auxiliaire, de ce même élément sur un autre élément comme un élément de travail ou un socle de travail ou un socle de fraise,
- le dispositif (14) étant fixé à un appareil de travail (1) ou à des parties de celui-ci, par exemple à un bras de colonne d'une colonne statique,
et
au moins une tige (auxiliaire) en forme d'une tige d'ajustage (20) étant prévue pour fixer l'une dite partie à déplacer,
- le dispositif (14) étant réalisé en plusieurs parties, et chaque tige d'ajustage (20) étant positionnable au choix sur au moins une des parties du dispositif (14) et pouvant être déplacée et fixée verticalement et/ou horizontalement par rapport aux axes des coordonnées,
- le dispositif (14) comprenant un corps de base (15) et un élément d'ajustage (21) avec tige d'ajustage (20), le corps de base (15) étant formé de manière à ce que celui-ci (15) puisse être maintenu sur l'appareil de travail (1),
**caractérisé en ce que** le corps de base (15) comporte un disque de cylindre (17) ainsi qu'un tourillon (18) dépassant de celui-ci (17) destiné à la fixation dans l'appareil de travail (1), un des côtés avant du disque de cylindre (17) étant conçu comme une surface de contact (19) pour l'élément d'ajustage (21), et ledit tourillon (18) dépassant du côté avant opposé, et son axe longitudinal étant également l'axe longitudinal (16) du corps de base (15), et l'axe longitudinal (16) étant disposé essentiellement verticalement par rapport à la surface de contact (19),
et
le dispositif (14) étant fixé de manière amovible à l'appareil de travail (1) ou à des éléments de ce dernier.

2. Dispositif selon la revendication 1,
**caractérisé en ce que**
la tige d'ajustage (20) peut être fixée au moyen d'un élément de serrage mécanique.

3. Dispositif selon la revendication 1,
**caractérisé en ce que**
la tige d'ajustage (20) peut être fixée au moyen d'une fixation magnétique.

4. Dispositif selon la revendication 1,
**caractérisé en ce qu'**une des surfaces extérieures de chaque élément d'ajustage (21) est conçue comme une surface d'appui (22) plane,
**en ce que** chaque élément d'ajustage (21) présente un perçage traversant (23), lequel traverse la surface d'appui (22), l'axe longitudinal du perçage (23) étant disposé verticalement par rapport à la surface d'appui (22), et
**en ce que** ce perçage (23) est conçu pour recevoir et fixer une tige d'ajustage (20), et une tige filetée (24) étant prévue comme élément de serrage mécanique dans l'élément d'ajustage (21), dont le guidage (perçage fileté) s'étend jusque dans le perçage (23).

5. Dispositif selon la revendication 1 ou 3,
**caractérisé en ce que**
le corps de base (15) comprend un aimant ou est lui-même conçu comme tel.

6. Dispositif selon la revendication 4,
**caractérisé en ce**
**qu'**autant la surface de contact (19) que la surface d'appui (22) possèdent une qualité de surface élevée, sont particulièrement meulées ou poncées.

7. Procédé pour déplacer au moins une partie d'un élément dentaire de ce même élément sur un autre élément dentaire, par exemple un élément de travail ou un socle de fraise, dans lequel la ou les partie(s) à déplacer de l'élément dentaire, par exemple un segment de couronne dentée ou un bout ou ce que l'on appelle une couronne primaire, est/sont fixée(s) sur un dispositif selon l'une quelconque des revendications 1 à 6 avec un moyen de liaison, par exemple de l'adhésif et le déplacement est effectué ensuite,
**caractérisé en ce que** ledit dispositif (14) est positionné une seule fois sur l'élément dentaire, puis toutes les parties à déplacer de cet élément dentaire sont reliées l'une après l'autre au dispositif (14) et ainsi, au moyen d'une seule étape de travail, toutes les parties à déplacer de l'élément dentaire sont déplacées sur l'autre élément et y sont positionnées sur sa surface de placement (8') et fixées le cas échéant.

8. Procédé selon la revendication 7,
**caractérisé en ce**
**que** la liaison entre le dispositif (14) et les parties à déplacer de l'élément dentaire est effectuée au moyen d'une matière plastique durcissable à l'air.
